# EUROPEAN PATENT APPLICATION

(11) **EP 4 746 273 A1**
(43) Date of publication of application: **20.05.2026**
(21) Application number: 25186235.5
(22) Date of filing: 30.06.2025
(51) Int. Cl.: H02M 3/335, H02M 1/38, H02M 3/00, H02M 1/00

(54) **CONTROL DEVICE, CONTROL METHOD AND NON-TRANSITORY COMPUTER READABLE STORAGE MEDIUM THEREOF FOR RESONANCE CONVERTER**

(30) Priority: 18.11.2024 TW 113144237
(71) Applicant: Lite-On Technology Corporation, Neihu, Taipei 114 (TW)
(72) Inventor: LI, Zhong-Heng, 114 Taipei (TW); CHIEN, Tzu-Hsiang, 114 Taipei (TW)
(74) Representative: dompatent

(57) **Abstract**

A control device for a resonance converter, includes a current converter and a control circuit. The current converter is electrically connected to a secondary side circuit of the resonant converter to measure a current value of the secondary side resonant current. The control circuit is electrically connected to the current converter to obtain the current value of the secondary side resonance current, and calculate a direction change time of the secondary side resonance current based on the current value of the secondary side resonance current to generate a delay time control signal based on the direction change time. The control circuit modulates a delay time of a state transition of at least one switch element of the secondary side circuit according to the delay time control signal, and the state transition is delayed as being after a completion of a direction change of the secondary side resonance current.

## Description

### TECHNICAL FIELD

The present disclosure relates to a control mechanism, and particularly relates to a control device, control method and a non-transitory computer-readable storage medium thereof which are applied to a resonance converter.

### BACKGROUND

In applications of energy supply, a resonance converter is often used for power conversion. For example, the resonance converter can perform a boost operation or a buck operation on a DC input voltage, so as to produce a DC output voltage. The resonance converter has, for example, a capacitor-inductor-inductor-capacitor (CLLC) architecture. The resonance converter with the CLLC architecture operates in a range of series-resonance-conversion (SRC) and a range of inductor-inductor-capacitor (LLC) according to different operating frequencies. When the resonance converter with the CLLC architecture operates at a fixed voltage, as the output of the resonance converter is a light load (i.e., low output voltage and low output current), the resonance converter operates in the range of SRC. When the output of the resonance converter is a heavy load (i.e., high output voltage and high output current), the resonance converter operates in the range of LLC.

On the other hand, when the resonance converter of the CLLC architecture operates under a wide range of varying voltages, the resonance converter operates in a charging mode with an input of low-voltage battery, or operates in a discharging mode with an input of high-voltage battery, it may happen that the output of the resonance converter is a heavily load but still operates in the SRC range. In the heavy load state, the current amount of the resonance current is greater, hence the total time length required for direction change of the resonance current is longer. Therefore, it may have a risk of malfunction: the synchronous rectification switch of the resonance converter has been switched to the on-state, but the action of direction change of the resonance current has not yet been completed.

In order to address the above-mentioned malfunction, a well-known solution is to establish a lookup table of relationships between the voltage/current of the battery and the direction change time, obtaining the actual corresponding direction change time according to the lookup table, thereby adjusting a time for a state transition of the synchronous rectification switch. However, when the resonance converter operates over a wide range of varying voltages, a difficulty of performing two-dimensional (voltage and current) lookup according to the lookup table may increase significantly. If the state transition time of the synchronous rectification switch is set conservatively and the time of on-state for the synchronous rectification switch is shortened, the resonance current may flow through the body diode of the synchronous rectification switch, resulting in a reduction in output efficiency of the resonance converter.

In response to the above technical problems, an improved control mechanism is needed, that can accurately control the state transition time of the switch element of the resonance converter and favor the output efficiency of the resonance converter.

### SUMMARY

According to one embodiment of the present disclosure, a control device for a resonance converter is provided. The control device is electrically connected to the resonance converter. The control device includes a current converter and a control circuit. The current converter is electrically connected to a secondary side circuit of the resonance converter for measuring a current value of a secondary side resonance current. The control circuit is electrically connected to the current converter for obtaining the current value of the secondary side resonance current, and calculating at least one direction change time of the secondary side resonance current according to the current value of the secondary side resonance current, so as to generate a delay time control signal according to the direction change time. The control circuit modulates a delay time of a state transition of at least one switch element of the secondary side circuit according to the delay time control signal, such that the state transition is delayed as being after a completion of a direction change of the secondary side resonance current.

According to another embodiment of the present disclosure, a control method for a resonance converter is provided. The control method includes the following steps. A current value of a secondary side resonance current of a resonance converter is measured, by a current converter of a control device. At least one direction change time of the secondary side resonance current is calculated according to the current value of the secondary side resonance current, by a control circuit of the control device. A delay time control signal is generated according to the direction change time, by the control circuit. A delay time of at least one switch element of the secondary side circuit is modulated according to the delay time control signal, by the control circuit, such that a state transition of the at least one switch element is delayed as being after a completion of a direction change of the secondary side resonance current.

According to still another embodiment of the present disclosure, a non-transitory computer-readable storage medium is provided. The non-transitory computer-readable storage medium includes a plurality of instructions. When the instructions are read by a controller, a computing device or a computer, the controller, the computing device or the computer are caused to execute the control method.

### BRIEF DESCRIPTION OF THE DRAWINGS

FIG. 1 is a schematic diagram of a control device for a resonance converter according to an embodiment of the present disclosure.
FIG. 2 is a functional block diagram of the control circuit of FIG. 1.
FIG. 3 is a waveform diagram of potential changes of the relevant signals, state transitions of the switch elements, and the current changes of the secondary side resonance current of the control circuit of FIG. 2.
FIG. 4 is a method flow chart for the control circuit to cooperate with the current converter to modulate the delay time of the switch element.
FIG. 5A is a waveform diagram of state transitions of some switch elements and current change of the secondary side resonance current of the present disclosure.
FIG. 5B is a waveform diagram of state transitions of some switch elements and current change of the secondary side resonance current of a prior art.
FIG. 6A is another waveform diagram of state transitions of some switch elements and current change of the secondary side resonance current of the present disclosure.
FIG. 6B is a waveform diagram of state transitions of some switch elements and current change of the secondary side resonance current of a prior art.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

### DETAILED DESCRIPTION

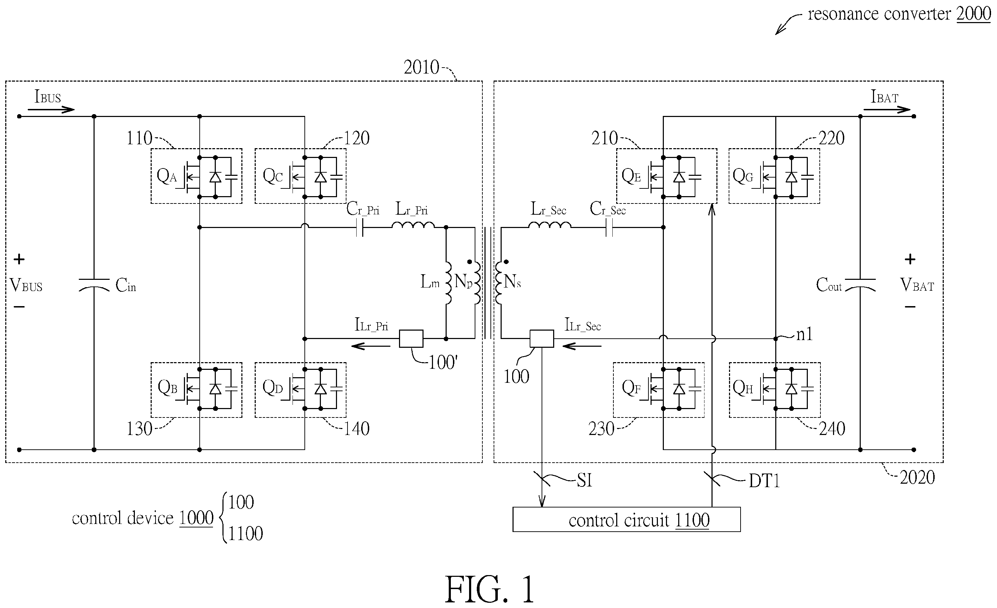

FIG. 1 is a schematic diagram of a control device for a resonance converter according to an embodiment of the present disclosure. As shown in FIG. 1, the resonance converter 2000 has, e.g., a direct current conversion (DC-DC) function to convert an input voltage V_{BUS} into an output voltage V_{BAT}, and convert an input current I_{BUS} into an output current I_{SAT}. Wherein, the resonance converter 2000 includes a primary side circuit 2010 and a secondary side circuit 2020. The primary side circuit 2010 includes an input capacitor Cᵢₙ, four switch elements 110, 120, 130 and 140, a resonance capacitor C_{r_Pri}, a resonance inductor L_{r_Pri}, a magnetized inductor Lₘ and a primary side coil N_{P}. A voltage difference between two ends of the input capacitor Cᵢₙ is equal to the input voltage V_{BUS}. The switch elements 110 and 130 are electrically connected to one end of the primary side coil N_{P} via the resonance capacitor C_{r_Pri} and the resonance inductor L_{r_Pri}, and the switch elements 120 and 140 are electrically connected to the other end of the primary side coil N_{P}. The switch elements 110, 120, 130 and 140 are implemented by, e.g., switch transistors. For example, the switch element 110 includes a switch transistor Q_{A}, the switch element 120 includes a switch transistor Q_{C}, the switch element 130 includes a switch transistor Q_{B}, and the switch element 140 includes a switch transistor Q_{D}.

The circuit architecture of the secondary side circuit 2020 is similar to the primary side circuit 2010. The secondary side circuit 2020 includes an output capacitor Cₒᵤₜ, four switch elements 210, 220, 230 and 240, a resonance capacitor C_{r_Sec}, a resonance inductor L_{r_Sec} and a secondary side coil N_{S}. The voltage difference between two ends of the output capacitor Cₒᵤₜ is equal to the output voltage V_{BAT}. The switch elements 210 and 230 are electrically connected to one end of the secondary side coil N_{S} via the resonance capacitor C_{r_Sec} and the resonance inductor L_{r_Sec}, and the switch elements 220 and 240 are electrically connected to the other end of the secondary side coil N_{S}. The electrical connection between the switch elements 220 and 240 and the other end of the secondary side coil N_{S} is the node n1. The switch element 210 includes a switch transistor Q_{E}, the switch element 220 includes a switch transistor Q_{G}, the switch element 230 includes a switch transistor Q_{F}, and the switch element 240 includes a switch transistor Q_{H}.

The resonance converter 2000 is, e.g., a converter with a CLLC architecture. The resonance converter 2000 has a charging mode and a discharging mode. In the charging mode, the switch elements 110-140 of the primary side circuit 2010 of the resonance converter 2000 serve as main control switches, and the switch elements 210-240 of the secondary side circuit 2020 serve as synchronous rectify (SR) switches. On the other hand, in the discharging mode, the switch elements 110-140 of the primary side circuit 2010 serve as SR switches, and the switch elements 210-240 of the secondary side circuit 2020 serve as main control switches.

The control device 1000 is used to control a switching delay time (hereinafter referred to as "delay time") of one or more of the switch elements 110-140 and 210-240 of the resonance converter 2000, in order to handle potential malfunction of the above switch elements. The control device 1000 includes a control circuit 1100 and a current converter 100. The current converter 100 is disposed in the secondary side circuit 2020, and the current converter 100 is used to measure the current value of the secondary side resonance current I_{Lr_Sec} of the secondary side circuit 2020. In the embodiment of FIG. 1, the current converter 100 is disposed between the secondary side coil N_{S} and the node n1. The secondary side resonance current I_{Lr_Sec} can flow through the current converter 100, the secondary side coil N_{S}, the resonance inductor L_{r_Sec} and the resonance capacitor C_{r_Sec} by order. In this embodiment, the current converter 100 may convert the secondary side resonance current I_{Lr_Sec} into a current signal SI, and the current signal SI represents the current value of the secondary side resonance current I_{Lr_Sec}.

The current converter 100 transmits the current signal SI to the control circuit 1100. In the charging mode of the resonance converter 2000, the control circuit 1100 calculates a time required for direction change (which may be referred to as "direction change time") of the secondary side resonance current I_{Lr_Sec} according to the current signal SI. Direction change of the secondary side resonance current I_{Lr_Sec} is defined as: the secondary side resonance current I_{Lr_Sec} switches from a negative current of a negative half period in the previous period to a positive current of a positive half period of the present period. The control circuit 1100 generates the delay time control signal DT1 according to the above-mentioned direction change time. The delay time control signal DT1 reflects a plurality of predetermined delay times, which are, equal to the calculated direction change time of the secondary side resonance current I_{Lr_Sec}. The control circuit 1100 transmits the delay time control signal DT1 to the switch element 210, and modulates the delay time of the switch element 210 according to the delay time control signal DT1. For example, when the switch element 210 includes the switch transistor Q_{E}, the delay time control signal DT1 can be used to control the gate voltage of the switch transistor Q_{E}, thereby controlling the on-state and off-state of the switch transistor Q_{E}, so as to appropriately delay the time point at which the on-state transitions to the off-state of the switch transistor Q_{E}, and/or delay the time point at which the off-state transitions to the on-state.

In one example, in the previous period of the resonance converter 2000, the control circuit 1100 calculates the direction change time of the secondary side resonance current I_{Lr_Sec} of the previous period, and modulates the delay time of switch element 210 in the next period, according to the direction change time of the previous period. For example, the delay time of the switch element 210 in the second period is modulated as being equal to the direction change time of the secondary side resonance current I_{Lr_Sec} in the first period; the delay time in the third period is modulated as being equal to the direction change time of the second period, the delay time in the fourth period is modulated as being equal to the direction change time of the third period, and so on. That is, in each period, the delay time of the switch element 210 is different, and is dynamically modulated according to the direction change time of the secondary side resonance current I_{Lr_Sec} in the previous period.

In another example, the control circuit 1100 only calculates the direction change time of the secondary side resonance current I_{Lr_Sec} in the first period, and modulates the delay time of the switch element 210 in each subsequent period according to the direction change time of the first period. The delay time of the switch element 210 in the second period, the third period and the fourth period (and so on) is modulated to be equal to the direction change time of the secondary side resonance current I_{Lr_Sec} in the first period. In other words, in this example, the delay time of the switch element 210 in each subsequent period is the same.

On the other hand, in the discharging mode of the resonance converter 2000, the control circuit 1100 can also cooperate with another current converter 100' disposed in the primary side circuit 2010. The current converter 100' is used to detect the current value of the primary side resonance current I_{Lr_Pri} of the primary side circuit 2010. The control circuit 1100 calculates the direction change time of the primary side resonance current I_{Lr_Pri} according to the current value of the primary side resonance current I_{Lr_Pri}, and generates the delay time control signal DT1 according to the above direction change time.

In summary, in the charging mode and the discharging mode of the resonance converter 2000, current values of the primary resonance current I_{Lr_Pri} of the primary side circuit 2010 and the secondary side resonance current I_{Lr_Sec} of the secondary side circuit 2020 are detected by the current converter 100 and the current converter 100' respectively, so as to calculate respective direction change times of the secondary resonance current I_{Lr_Sec} and the primary resonance current I_{Lr_Pri}. That is, in the charging mode and discharging mode of the resonance converter 2000, current value of the resonance current on only one side is detected.

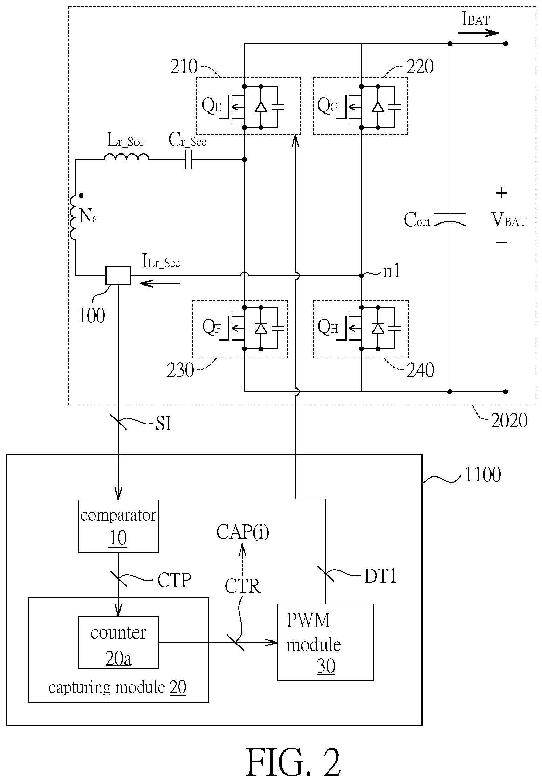

FIG. 2 is a functional block diagram of the control circuit of FIG. 1, and FIG. 2 illustrates the control mechanism of the control circuit 1100 for the switch element 210. In one example, the control circuit 1100 is a processor in the form of a hardware circuit, such as (but not limited to) a digital signal processor (DSP), a central processing unit (CPU), or a micro control unit (MCU), etc. As shown in FIG. 2, the control circuit 1100 includes a comparator 10, a capturing module 20 and a pulse width modulation (PWM) module 30. The comparator 10 and the PWM module 30 are hardware circuit units inside the control circuit 1100. In one example, the comparator 10 is, e.g., a "Comparator Subsystem" (which may be referred to as "CMPSS") inside the control circuit 1100; the capturing module 20 is, e.g., an "Enhanced Capture" module (which may be referred to as "ECAP") inside the control circuit 1100. The capturing module 20 includes a counter 20a, and the counter 20a is, e.g., a hardware circuit unit; and the PWM module 30 is, e.g., a PWM circuit.

Specifically, the comparator 10 is electrically connected to the current converter 100 to receive the current signal SI, and the comparator 10 generates the comparison result signal CTP according to the current signal SI. In one example, the comparison result signal CTP is, for example, a "CMPSS Trip" signal of the "CMPSS" module inside the control circuit 1100.

Furthermore, the counter 20a is electrically connected to the comparator 10 to receive the comparison result signal CTP, so that the counter 20a generates the counting signal CTR according to the comparison result signal CTP; the PWM module 30 is electrically connected to the counter 20a to receive the counting signal CTR, and then the PWM module 30 generates the delay time control signal DT1 according to the counting signal CTR; and the PWM module 30 is electrically connected to the switch element 210, so as to transmit the delay time control signal DT1 to the switch element 210.

In another example, the overall function of the control circuit 1100 is implemented by software code inside the central processing unit or the digital signal processor. Moreover, the comparator 10, capturing module 20, counter 20a and PWM module 30 inside the control circuit 1100 are all software modules, which are implemented by software code (the software code includes a plurality of instructions). The above-mentioned software code can be stored in a non-transitory computer-readable storage medium; the non-transitory computer-readable storage medium is, for example, various forms of non-transitory (non-volatile) memory, hard disk, storage drive, etc. The non-transitory computer-readable storage medium can be electrically connected to, or disposed in, the central processing unit or the digital signal processor. The central processing unit or digital signal processor reads the above-mentioned software code from the non-transitory computer-readable storage medium, and executes the instructions of the software code to execute functions of the comparator 10, the capturing module 20, the counter 20a and PWM module 30.

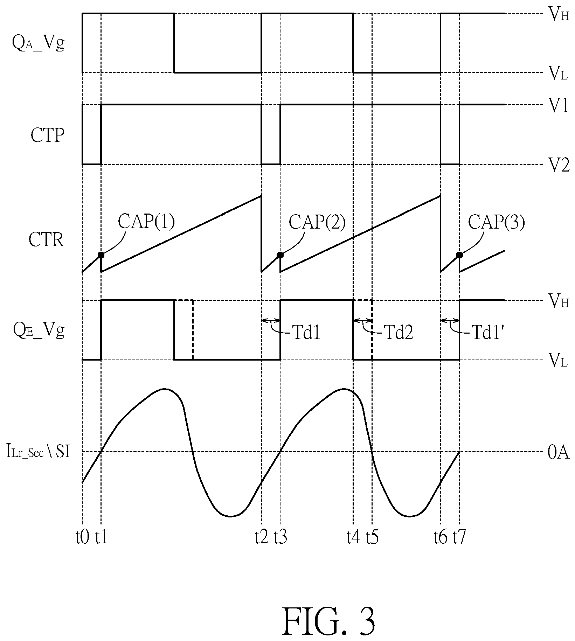

FIG. 3 is a waveform diagram of potential changes of the relevant signals, state transitions of the switch elements, and the current changes of the secondary side resonance current of the control circuit of FIG. 2. As shown in FIG. 3, the control circuit 1100 cooperates with the current converter 100 to operate. Please refer to FIGS. 2 and 3, the current converter 100 detects the secondary side resonance current I_{Lr_Sec} and converts the detection result into a current signal SI. The current signal SI can represent the current value of the secondary side resonance current I_{Lr_Sec}. The comparator 10 receives the current signal SI from the current converter 100, so as to analyze the current value of the secondary side resonance current I_{Lr_Sec} from the current signal SI.

The comparator 10 generates a comparison result signal CTP according to the current signal SI of the secondary side resonance current I_{Lr_Sec}. The comparison result signal CTP is, for example, a square wave signal changing between the first potential V1 and the second potential V2, where the first potential V1 is a high potential (e.g., 5V), and the second potential V2 is a low potential (e.g., -5V). In one example, when the switch element 110 (shown in FIG. 1) of the primary side circuit 2010 of the resonance converter 2000 transitions to the on-state in the next period, the comparison result signal CTP is reset, and the secondary side resonance current I_{Lr_Sec} is less than 0, hence the comparator 10 converts the comparison result signal CTP into the second potential V2. More specifically, in the example of FIG. 3, at time point t0, the switch element 110 transitions to the on-state, the gate voltage Q_{A}_Vg of the switch transistor Q_{A} of the switch element 110 changes to the high potential V_{H}, and the comparison result signal CTP is reset; at time point t0, since the secondary side resonance current I_{Lr_Sec} is less than 0, the comparator 10 resets the comparison result signal CTP to the second potential V2. The time length during which the comparison result signal CTP is at the second potential V2 may represent the direction change time of the secondary side resonance current I_{Lr_Sec}**.**

In other words, the comparator 10 compares the current value of the secondary side resonance current I_{Lr_Sec} with a zero current level (i.e., zero amperes (0A)), and the potential of the comparison result signal CTP reflects the comparison result. When the comparison result signal CTP is at the first potential V1, it means that the current value of the secondary side resonance current I_{Lr_Sec} is greater than the zero current level; on the contrary, when the comparison result signal CTP is at the second potential V2, it means that the current value of the secondary side resonance current I_{Lr_Sec} is less than or equal to the zero current level. In the example of FIG. 3, at time point t1, the current value of the secondary side resonance current I_{Lr_Sec} is greater than the zero current level, and the comparison result signal CTP changes to the first potential V1.

Then, the comparison result signal CTP generated by the comparator 10 is sent to the counter 20a. In one example, the control circuit 1100 includes at least one register, wherein the comparison result signal CTP can be directed to the counter 20a inside the capturing module 20 through the setting of the register of the control circuit 1100; the counter 20a counts in response to the comparison result signal CTP to generate a counting value. Furthermore, the counter 20a also outputs a counting signal CTR; the counting signal CTR can reflect a current counting value of the counter 20a.

A positive edge (a rising edge at which the second potential V2 changes to the first potential V1) and a negative edge (a falling edge at which the first potential V1 changes to the second potential V2) of the square wave of the comparison result signal CTP can reset the counter 20a. As shown in FIG. 3, the positive edge of the comparison result signal CTP occurs at time point t1, and the counting signal CTR of the counter 20a is reset (i.e., the counting value of the counter 20a is reset to "0", and counts again). Similarly, the positive edge of the comparison result signal CTP also occurs at time point t3, and the counting signal CTR of the counter 20a is reset. On the other hand, the negative edge of the comparison result signal CTP occurs at time points t0, t2 and t6, and the counting signal CTR of the counter 20a is reset.

As mentioned above, the length of time during which the comparison result signal CTP is at the second potential V2 can represent the direction change time of the secondary side resonance current I_{Lr_Sec}; and, within the time interval during which the comparison result signal CTP is at the second potential V2, the counting of the counter 20a reaches the counting value CAP(i). Therefore, the counting value CAP(i) can be used to represent the direction change time of the secondary side resonance current I_{Lr_Sec} of a corresponding i-th period.

Considering multiple time points when the positive edges of the comparison result signal CTP trigger the counter 20a,at these time points, the counting signal CTR of the counter 20a respectively has a counting value CAP(i). At time point t1 in FIG. 3, the positive edge of the comparison result signal CTP triggers the counter 20a; the counting value CAP(1) of the counting signal CTR at time point t1 represents the direction change time of the secondary side resonance current I_{Lr_Sec} in the first period. Similarly, the positive edge of the comparison result signal CTP triggers the counter 20a at time point t3, and the counting value CAP(2) of the counting signal CTR at time point t3 represents the direction change time of the secondary side resonance current I_{Lr_Sec} in the second period. Then, at another time point t7, the positive edge of the comparison result signal CTP, and the counting value CAP(3) at the time point t7 represents the direction change time of the secondary side resonance current I_{Lr_Sec} in the third period.

The counting signal CTR generated by the counter 20a is provided to the PWM module 30. The PWM module 30 analyzes the counting values CAP(1), CAP(2) and CAP(3), etc. from the counting signal CTR, so as to obtain the direction change time of the secondary side resonance current I_{Lr_Sec} in each period. Alternatively, the counter 20a may only provide the counting value CAP(i) at time points at the positive edges of the comparison result signal CTP to the PWM module 30, without providing the counting signal CTR at each time point to the PWM module 30, so as to save the amount of data transmission.

Then, the PWM module 30 generates a delay time control signal DT1 according to the direction change time of the secondary side resonance current I_{Lr_Sec}, and controls the switch element 210 of the secondary side circuit 2020 by the delay time control signal DT1, so as to modulate the delay time of the switch element 210. The delay time of the switch element 210 is applied to the state transition of the switch element 210, so as to delay the time point of the state transition of the switch element 210. As mentioned above, the state transition of the switch element 210 includes: the switch element 210 transitions from the off-state to the on-state, or from the on-state to the off-state. Taking the second period as an example, if no delay time is applied to the state transition of the switch element 210, the state transition of the switch element 210 is substantially synchronized with the switch element 110 of the primary side circuit 2010; the switch element 210 originally transitions from off-state to on-state at time point t2, and transitions from on-state to off-state at time point t4. That is, if no delay time is applied to the state transition of the switch element 210, the gate voltage Q_{E}_Vg of the switch transistor Q_{E} of the switch element 210 originally changes from the low potential V_{L} to the high potential V_{H} at the time point t2, and changes from high potential V_{H} to the low potential V_{L} at the time point t4.

If a delay time is applied to the state transition of the switch element 210, in the second period, the time point t2 at which the switch element 210 transitions from the off-state to the on-state is delayed to the time point t3. The delay time Td1 from time point t2 to time point t3 is equal to the counting value CAP(1) of the first period; where the counting value CAP(1) represents the direction change time of the secondary side resonance current I_{Lr_Sec} in the first period. Furthermore, the time point t4 at which the switch element 210 transitions from the on-state to the off-state is delayed to the time point t5. The delay time Td2 from time point t4 to time point t5 may be equal to the delay time Td1, or equal to the delay time Td1 minus a margin time. The margin time is used to provide a safety margin when the switch element 210 transitions from the on-state to the off-state, so as to ensure that the switch element 210 must transition from the on-state to the off-state before the completion of direction change of the secondary side resonance current I_{Lr_Sec}, where the margin time is, e.g., 600 ns. In other words, the state transition of the switch element 210 may include a "first state transition" and a "second state transition"; where the first state transition is defined as: the switch element 210 transitions from the off-state to the on-state, and the second state transition is defined as: switch element 210 transitions from the on-state to the off-state. The delay time Td2 of the second state transition may be equal to the delay time Td1 of the first state transition, or equal to the delay time Td1 of the first state transition minus the margin time.

Similarly, in the third period, the time point t6 at which the switch element 210 transitions from the off-state to the on-state is delayed to time point t7. The delay time Td1' from time point t6 to time point t7 is equal to the counting value CAP(2) of the second period (which represents the direction change time of the secondary side resonance current I_{Lr_Sec} in the second period).

In the aforementioned example, the delay time of the switch element 210 in the next period is modulated as being equal to the direction change time of the secondary side resonance current I_{Lr_Sec} in the previous period. Such as, the delay time Td1 of the switch element 210 in the second period is modulated as being equal to the counting value CAP(1) of the first period (which represents the direction change time of the secondary side resonance current I_{Lr_Sec} in the first period). Furthermore, the delay time Td1' of the switch element 210 in the third period is modulated as being equal to the counting value CAP(2) of the second period (which represents the direction change time of the secondary side resonance current I_{Lr_Sec} in the second period).

Alternatively, in another example, the delay time of the switch element 210 in the second period, the third period and the fourth period, etc. can be modulated as being equal to the direction change time of the secondary side resonance current I_{Lr_Sec} of the first period. Such as, the delay time Td1 of the switch element 210 in the second period and the delay time Td1' in the third period are both modulated as being equal to the counting value CAP(1) of the first period.

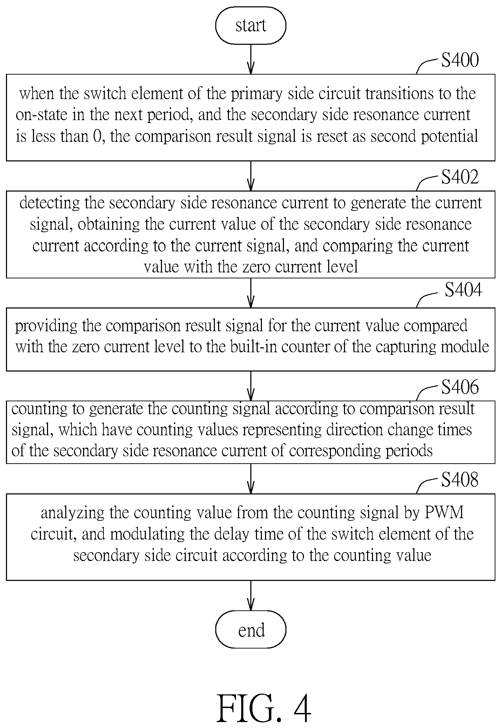

FIG. 4 is a method flow chart for the control circuit to cooperate with the current converter to modulate the delay time of the switch element, also referring to the functional block diagram of FIG. 2 and the waveform diagram of FIG. 3.

In step S400 of FIG. 4, when the switch element 110 of the primary side circuit 2010 of the resonance converter 2000 transitions to the on-state in the next period, the comparison result signal CTP of the comparator 10 is reset; when the switch element 110 transitions to the on-state, if the secondary side resonance current I_{Lr_Sec} is less than 0, the comparator 10 resets the comparison result signal CTP to the second potential V2. Such as, in the example of FIG. 3, at time point t0, the switch element 110 transitions to the on-state, and the gate voltage Q_{A}_Vg of the switch transistor Q_{A} of the switch element 110 changes to the high potential V_{H}; at time point to the secondary side resonance current I_{Lr_Sec} is less than 0, hence the comparison result signal CTP is reset to the second potential V2.

In step S402, the current converter 100 detects the secondary side resonance current I_{Lr_Sec} to generate the current signal SI. Furthermore, the comparator 10 obtains the current value of the secondary side resonance current I_{Lr_Sec} according to the current signal SI, and compares the current value of the secondary side resonance current I_{Lr_Sec} with the zero current level. Such as, at time point t1 in FIG. 3, the current value of the secondary side resonance current I_{Lr_Sec} is greater than the zero current level (0A); in response to the above comparison result, the comparison result signal CTP changes to the first potential V1.

In step S404, the comparison result signal CTP of the comparator 10 is provided to the built-in counter 20a of the capturing module 20.

In step S406, the counter 20a counts according to the comparison result signal CTP to generate the counting signal CTR. Corresponding to the time points of the positive edges of the comparison result signal CTP, the counting signals CTR respectively have counting values CAP(i). These counting values CAP(i) represent the direction change times of the secondary side resonance current I_{Lr_Sec} of corresponding periods. Such as, at the time points t1, t3 and t7 of the positive edges of the comparison result signal CTP, and at the time points t0, t2 and t6 of the negative edges of the comparison result signal CTP, the counter 20a is reset and counts again. The comparison result signal CTP in the time interval from time point t0 to time point t1 is the second potential V2, and the counting signal CTR reaches the counting value CAP(1) at time point t1, indicating the direction change time of the secondary side resonance current I_{Lr_Sec} in the first period. Similarly, the comparison result signal CTP in the time interval from time point t2 to time point t3 is the second potential V2, and the counting signal CTR reaches the counting value CAP(2) at time point t3, indicating the direction change time of the secondary side resonance current I_{Lr_Sec} of the second period. By analogy, after the counter 20a is reset, the counting signal CTR reaches the counting value CAP(3) at time point t7, indicating the direction change time of the secondary side resonance current I_{Lr_Sec} in the third period.

In step S408, the counter 20a transmits the counting signal CTR to the PWM module 30, and the PWM module 30 analyzes the counting value CAP(i) from the counting signal CTR. Alternatively, in another example, the counter 20a only transmits the counting value CAP(i) corresponding to the time point of the positive edge of the comparison result signal CTP to the PWM module 30. Furthermore, the PWM module 30 modulates the delay time of the switch element 210 of the secondary side circuit 2020 according to the counting value CAP(i). Such as, in the second period, a delay time Td1 is applied to the time point at which the switch element 210 transitions from the off-state to the on-state, and the delay time Td1 is equal to the counting value CAP(1) of the first period. Similarly, a delay time Td1' is applied to the time point of the state transition of the switch element 210 in the third period, and the delay time Td1' is equal to the counting value CAP(2) of the second period. Still, in yet another example, the delay time Td1 applied for the second period and the delay time Td1' applied for the third period are both equal to the counting value CAP(1) of the first period.

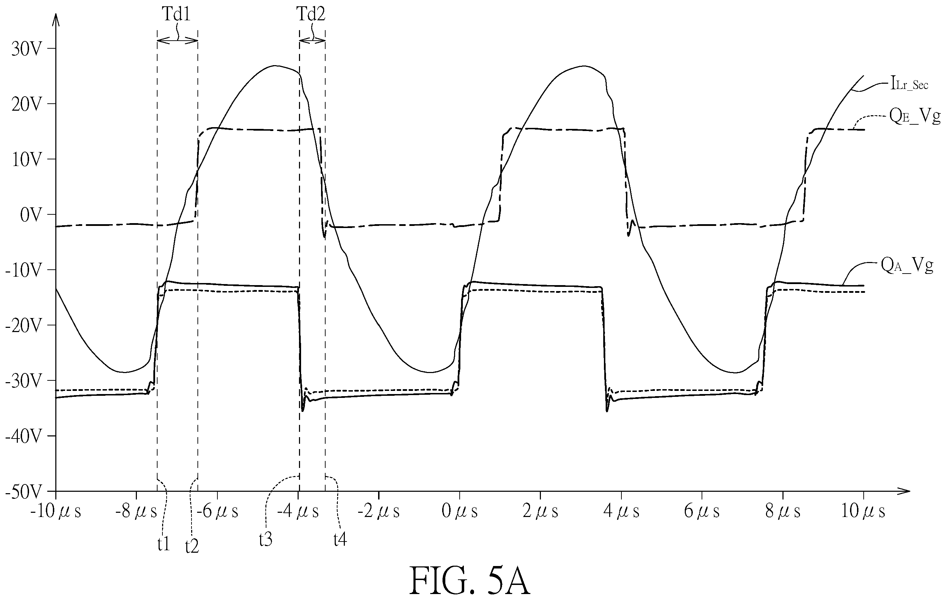

FIG. 5A is a waveform diagram of state transitions of some switch elements and current change of the secondary side resonance current of the present disclosure, which represents a simulation result of the control device 1000 applying a delay time modulation mechanism to the resonance converter 2000. In the simulated conditions of the example of FIG. 5A, the output current I_{BAT} of the resonance converter 2000 is approximately 18A, and the output voltage V_{BAT} is approximately 200V. Specifically, the switch element 110 of the primary side circuit 2010 performs a state transition at time point t1 and transitions from the off-state to the on-state. That is, the gate voltage Q_{A}_Vg of the switch transistor Q_{A} of the switch element 110 changes to the high potential V_{H} at the time point t1.

The control device 1000 of the present disclosure applies a delay time modulation mechanism, so as to apply a delay time to the state transition of the switch element 210 of the secondary side circuit 2020. As shown in the simulation results of FIG. 5A, the state transition of the switch element 210 from the off-state to the on-state is delayed from the original time point t1 to the time point t2. That is, the change to the high potential V_{H} for the gate voltage Q_{E}_Vg of the switch transistor Q_{E} of the switch element 210 is delayed to the time point t2. The delay time Td1 from time point t1 to time point t2 is determined according to the counting value counted by the control device 1000. The delay time Td1 is, e.g., equal to the direction change time of the secondary side resonance current I_{Lr_Sec} of the secondary side circuit 2020 in the previous period.

Furthermore, the state transition of the switch element 210 from the on-state to the off-state is delayed from the original time point t3 to the time point t4. That is, the change to the low potential V_{L} for the gate voltage Q_{E}_Vg of the switch transistor Q_{E} of the switch element 210 is delayed to the time point t4. The delay time Td2 from time point t3 to time point t4 is, e.g., equal to the delay time Td1 minus the margin time.

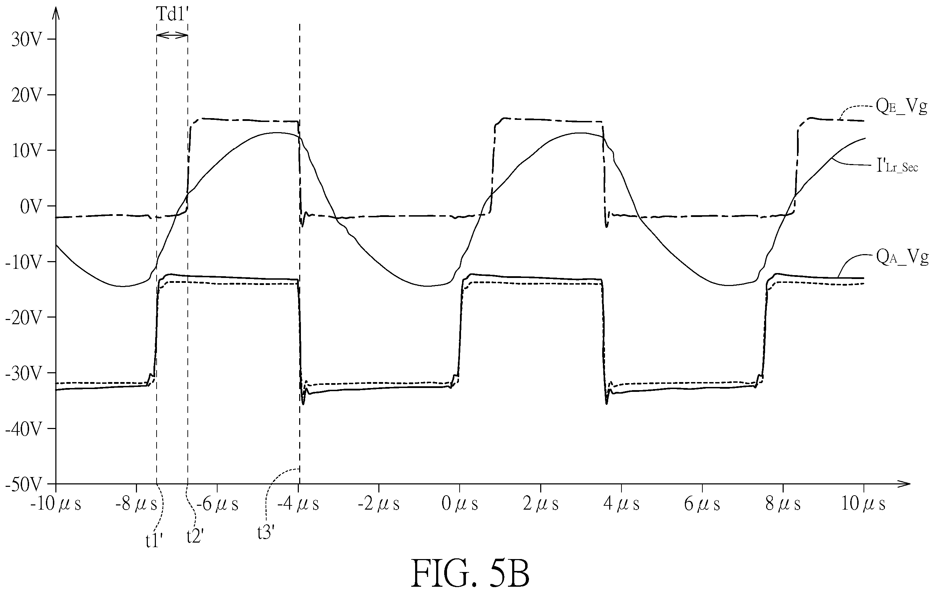

FIG. 5B is a waveform diagram of state transitions of some switch elements and current change of the secondary side resonance current of a prior art, which shows that a conventional control device applies a fixed delay time when the secondary side switch element is turned-on, and there is no delay when the secondary-side switch element is turned-off.

In the simulation conditions of the example of FIG. 5B, the output current I_{BAT} of the resonance converter 2000 is approximately 18A, and the output voltage V_{BAT} is approximately 200V. Therefore, the simulation conditions are the same as the example of FIG. 5A, in which the switch element 110 of the primary side circuit 2010 performs a state transition from the off-state to the on-state at time point t1'. That is, the gate voltage Q_{A}_Vg of the switch transistor Q_{A} of the switch element 110 changes to the high potential V_{H} at the time point t1'.

In the prior arts, the control device 1000 applies a fixed delay time Td1' (e.g., 900 ns) to the switch transistor Q_{E} of the secondary side switch element 210, such that the change to the high potential V_{H} for its gate voltage Q_{E}_Vg is delayed from the time point t1' to time point t2'. The switch element 210 changes to the low potential V_{L} at time point t3', which is synchronized with the voltage change of the gate voltage Q_{A}_Vg of the switch transistor Q_{A} of the primary side switch element 110, in which no delay time is applied. At this time, the secondary side resonance current I_{'Lr_sec} has not completed the direction change.

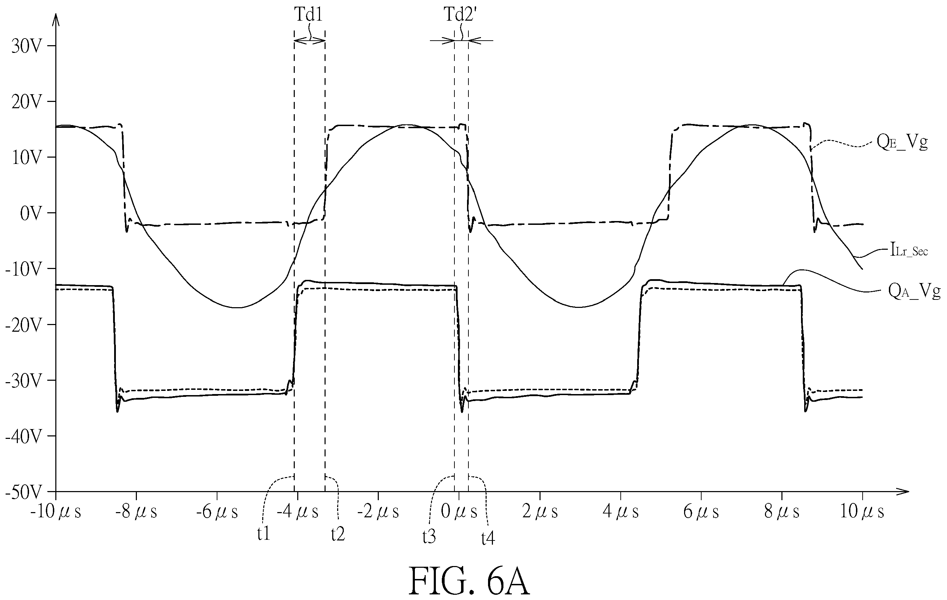

FIG. 6A is another waveform diagram of state transitions of some switch elements and current change of the secondary side resonance current of the present disclosure, which represents another simulation result of the control device 1000 applying a delay time modulation mechanism to the resonance converter 2000. The circuit architecture and delay time modulation mechanism of the example of FIG. 6A are the same as that of the example of FIG. 5A, wherein the simulation conditions of FIG. 6A have a heavier load than the example of FIG. 5A.

In the simulation conditions of the example of FIG. 6A, the output current I_{BAT} of the resonance converter 2000 is approximately 22A, and the output voltage is approximately 250V. Specifically, a transition from the off-state to the on-state for the switch element 210 which is applied with the delay time modulation mechanism, is delayed from the original time point t1 to the time point t2 (i.e., change to the high potential V_{H} for the gate voltage Q_{E}_Vg of the switch transistor Q_{E} of the switch element 210 is delayed to time point t2). The original time point t1 is delayed to time point t2, according to the delay time Td1.

Furthermore, a transition from the on-state to the off-state for the switch element 210 is delayed from the original time point t3 to the time point t4 (i.e., change to low potential V_{L} for the gate voltage Q_{E}_Vg of the switch transistor Q_{E} of the switch element 210 is delayed to the time point t4). The delay time Td2' from time point t3 to time point t4 is, e.g., equal to the delay time Td1 minus the margin time. It should be noted that, the delay time Td2' in the example of FIG. 6A is smaller than the delay time Td2 in the example of FIG. 5A.

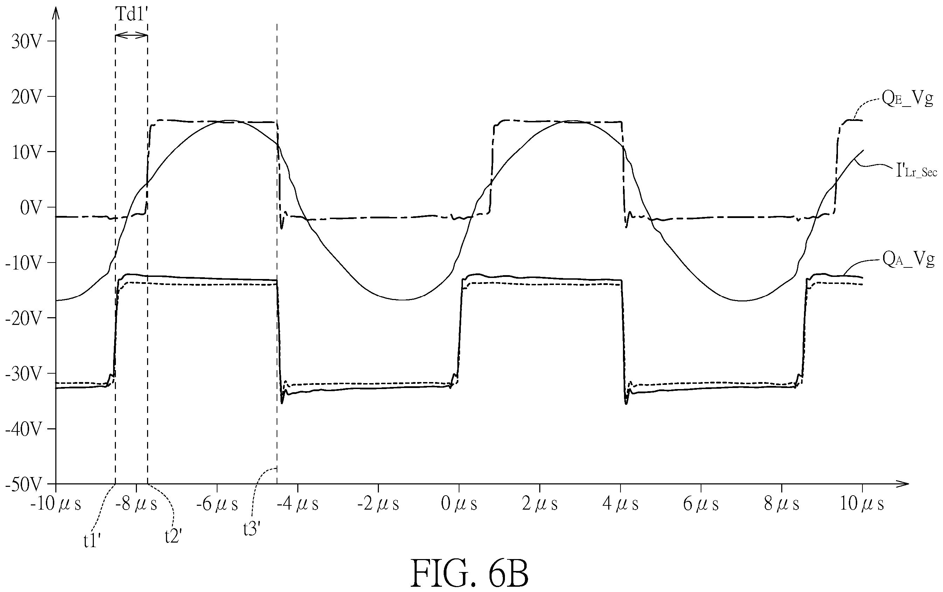

FIG. 6B is a waveform diagram of state transitions of some switch elements and current change of the secondary side resonance current of a prior art, which shows that a conventional control device applies a fixed delay time when the secondary side switch element is turned-on, and there is no delay when the secondary-side switch element is turned-off.

In the simulation conditions of the example of FIG. 6B, the output current I_{BAT} of the resonance converter 2000 is approximately 22A, and the output voltage is approximately 250V. Therefore, the simulation conditions are the same as the example of FIG. 6A, in which the switch element 110 of the primary side circuit 2010 performs a state transition at time point t1', from the off-state to the on-state. That is, the gate voltage Q_{A}_Vg of the switch transistor Q_{A} of the switch element 110 changes to the high potential V_{H} at the time point t1'.

In the prior art, the control device 1000 applies a fixed delay time Td1' (e.g., 900 ns) to the switch transistor Q_{E} of the secondary side switch element 210, such that the change to the high potential V_{H} for its gate voltage Q_{E}_Vg is delayed from the time point t1' to time point t2'. The switch element 210 changes to the low potential V_{L} at time point t3', which is also synchronized with the gate voltage Q_{A}_Vg of the switch transistor Q_{A} of the primary side switch element, without any delay time applied. At this time, the secondary side resonance current I'_{Lr_Sec} has not completed its direction change.

In the above-mentioned examples of the prior arts shown in FIGS. 5B and 6B, no delay time is applied when the secondary side switch element transitions from the on-state to the off-state, and the delay time of the transition for the secondary side switch element to transition from the off-state to the on-state has a fixed value. However, the direction change time of the secondary side resonance current has some variances. When the delay time of the state transition of the secondary side switch element has a fixed value, it will cause malfunction of secondary side switch element when the direction change of the secondary side resonance current has not completed yet.

In contrast, in the above-mentioned examples of FIG. 5A and FIG. 6A of the present disclosure, a dynamic delay time modulation mechanism is applied, and the direction change time is actually measured according to the secondary side resonance current of corresponding period, so as to dynamically modulate the delay times of the state transitions of the secondary side switch element in different periods, respectively. In addition, a delay time is also applied to the state transition (i.e., the transition from the off-state to the on-state) of the secondary side switch element in another half period (i.e., the half period of the off-state), and a safety margin (i.e., a margin time) is taken into consideration. Therefore, it can be ensured that, the secondary side switch element of the resonance converter 2000 of the present disclosure performs state transitions after the direction change of the secondary side resonance current is completed, thereby greatly reducing the risk of malfunction of the secondary side switch element.

It will be apparent to those skilled in the art that various modifications and variations can be made to the disclosed embodiments. It is intended that the specification and examples be considered as exemplars only, with a true scope of the disclosure being indicated by the following claims and their equivalents.

## Claims

1. A control device (1000) for a resonance converter (2000), the control device (1000) is electrically connected to the resonance converter (2000), and the control device (1000) comprising:
a current converter (100), electrically connected to a secondary side circuit (2020) of the resonance converter (2000) for measuring a current value of a secondary side resonance current (I_{Lr_Sec}), and
a control circuit (1100), electrically connected to the current converter (100) for obtaining the current value of the secondary side resonance current (I_{Lr_Sec}), and calculating at least one direction change time of the secondary side resonance current (I_{Lr_Sec}) according to the current value of the secondary side resonance current (I_{Lr_Sec}), so as to generate a delay time control signal (DT1) according to the direction change time,
wherein, the control circuit (1100) modulates a delay time of a state transition of at least one switch element of the secondary side circuit (2200) according to the delay time control signal (DT1), such that the state transition is delayed as being after a completion of a direction change of the secondary side resonance current (I_{Lr_Sec}).

2. The control device of claim 1, wherein the at least one switch element operates in a plurality of periods, the plurality of periods at least comprise a first period, a second period and a third period, and the control circuit modulates the delay time of the at least one switch element in the second period and the third period as being equal to the direction change time of the secondary side resonance current in the first period.

3. The control device of claim 1, wherein the at least one switch element operates in a plurality of periods, the plurality of periods at least comprises a first period, a second period and a third period, and the control circuit (1100) modulates the delay time of the at least one switch element in the second period as being equal to the direction change time of the secondary side resonance current (I_{Lr_Sec}) in the first period, and modulates the delay time of the at least one switch element in the third period as being equal to the direction change time of the secondary side resonance current (I_{Lr_Sec}) in the second period.

4. The control device of claims 2 or 3, wherein the state transition of the at least one switch element comprises a first state transition and a second state transition, the first state transition is a transition from an off-state to an on-state of the at least one switch element, the second state transition is a transition from the on-state to the off-state of the at least one switch element, and the control circuit (1100) modulates the delay time of the second state transition as being equal to the delay time of the first state transition minus a margin time.

5. The control device of claims 2 or 3, wherein the control circuit comprising:
a comparator (10), for analyzing the current value of the secondary side resonance current (I_{Lr_Sec}) according to a current signal (SI) generated by the current converter (100), and comparing the current value of the secondary side resonance current (I_{Lr_Sec}) with a zero current level to generate a comparison result signal (CTP); and
a capturing module (20), comprising a counter (20a) and being electrically connected to the comparator (10), the counter (20a) counts according to the comparison result signal (CTP) generated by the comparator (10) to obtain a counting signal (CTR).

6. The control device of claim 5, wherein the control circuit (1100) further comprising:
a pulse width modulation (PWM) circuit (30), electrically connected to the capturing module (20) for receiving the counting signal (CTR) generated by the counter (20a), and analyzing the counting signal (CTR) to obtain a plurality of counting values, and the plurality of counting values respectively correspond to the direction change time of the secondary side resonance current (I_{Lr_Sec}) in the plurality of periods, and generating the corresponding delay time control signal according to the direction change time of the plurality of periods.

7. A control method for a resonance converter (2000), comprising:
measuring a current value of a secondary side resonance current (I_{Lr_Sec}) of the resonance converter (2000), by a current converter (100) of a control device (1000);
calculating at least one direction change time of the secondary side resonance current (I_{Lr_Sec})according to the current value of the secondary side resonance current (I_{Lr_Sec}), by a control circuit (1100) of the control device (1000);
generating a delay time control signal (DT1) according to the direction change time, by the control circuit (1100); and
modulating a delay time of at least one switch element of the secondary side circuit (I_{Lr_Sec})according to the delay time control signal (DT1), by the control circuit (1100), such that a state transition of the at least one switch element is delayed as being after a completion of a direction change of the secondary side resonance current (I_{Lr_Sec}).

8. The control method of claim 7, further comprising the at least one switch element operating in a plurality of periods, the plurality of periods at least comprise a first period, a second period and a third period, and modulating the delay time of the at least one switch element in the second period and the third period as being equal to the direction change time of the secondary side resonance current (I_{Lr_Sec})in the first period, by the control circuit.

9. The control method of claim 7, further comprising the at least one switch element operating in a plurality of periods, the plurality of periods at least comprise a first period, a second period and a third period, and modulating the delay time of the at least one switch element in the second period as being equal to the direction change time of the secondary side resonance current (I_{Lr_Sec}) in the first period, and modulating the delay time of the at least one switch element in the third period as being equal to the direction change time of the secondary side resonance current (I_{Lr_Sec}) in the second period, by the control circuit (1100).

10. The control method of claims 8 or 9, wherein the state transition of the at least one switch element comprises a first state transition and a second state transition, the first state transition is a transition from an off-state to an on-state of the at least one switch element, the second state transition is a transition from the on-state to the off-state of the at least one switch element, and the control method further comprising:
modulating the delay time of the second state transition as being equal to the delay time of the first state transition minus a margin time, by the control circuit (1100) of the control device (1000).

11. The control method of claims 8 or 9, further comprising:
analyzing, by a comparator of the control circuit, the current value of the secondary side resonance current (I_{Lr_Sec}) according to a current signal (CTR) generated by the current converter (100);
comparing the current value of the secondary side resonance current (I_{Lr_Sec}) with a zero current level, by the comparator (10), so as to generate a comparison result signal (CTP); and
counting, by a counter (20a) of a capturing module (20), to obtain a counting signal (CTR) according to the comparison result signal (CTP) generated by the comparator (10).

12. The control method of claim 11, further comprising:
receiving the counting signal (CTR) generated by the counter (20a), by a pulse width modulation (PWM) circuit (30);
analyzing the counting signal (CTR) to obtain a plurality of counting values, by the PWM circuit (30), the plurality of counting values respectively correspond to the direction change time of the secondary side resonance current (I_{Lr_Sec}) in the plurality of periods; and
generating the corresponding delay time control signal according to the direction change time of the plurality of periods, by the PWM circuit (30).

13. A non-transitory computer-readable storage medium, comprising a plurality of instructions, when the instructions are read by a controller, a computing device or a computer, the controller, the computing device or the computer are caused to execute the control method of claim 7.
